# EUROPÄISCHE PATENTSCHRIFT

(11) **EP 0 321 916 B1**
(45) Veröffentlichungstag und Bekanntmachung des Hinweises auf die Patenterteilung: **03.08.1994**
(21) Anmeldenummer: 88121272.4
(22) Anmeldetag: 20.12.1988
(51) Int. Cl.: C08G 77/62, C04B 35/58

(54) **Polymere Hydridosilazane, Verfahren zu ihrer Herstellung, sowie die Herstellung Siliziumnitrid enthaltender keramischer Materialien**
Polymeric hydridothiosilazanes, process for their preparation, and preparation of silicon nitride-containing ceramic materials
Polymères d'hydridosilazanes, leur procédé de préparation, et procédé de préparation de matériels ceramiques contenant du nitrure de silicium

(30) Priorität: 23.12.1987 DE 3743825
(43) Veröffentlichungstag der Anmeldung: 28.06.1989
(73) Patentinhaber: HOECHST AKTIENGESELLSCHAFT, 65926 Frankfurt am Main (DE)
(72) Erfinder: Vaahs, Tilo, Dr., D-6233 Kelkheim Taunus (DE); Gerdau, Thomas, Dr., D-6239 Eppstein Taunus (DE); Peuckert, Marcellus, Dr., D-6238 Hofheim am Taunus (DE); Brück, Martin, D-6238 Hofheim am Taunus (DE)

(56) Entgegenhaltungen:
- EP-A- 0 235 486
- EP-A- 0 304 239
- US-A- 4 482 669

## Beschreibung

Die vorliegende Erfindung betrifft neue polymere Hydridosilazane, ihre Herstellung, sowie ihre Weiterverarbeitung zu Siliziumnitrid enthaltendem keramischen Material. Das Siliziumnitrid enthaltende keramische Material wird durch Pyrolyse aus den polymeren Hydridosilazanen erhalten und besteht zum größten Teil aus Siliziumnitrid, welches Anteile an Siliziumkarbid und Kohlenstoff enthält.

Die Pyrolyse von Polysilazanen zu Siliziumnitrid/SiC-haltigem keramischen Material wurde bereits in der Literatur (R.R. Wills et al., Ceramic Bulletin, Vol. 62 (1983), 904-915) beschrieben.

Zur Herstellung von Polysilazanen werden in der Regel Chlorsilane als Ausgangsmaterialien eingesetzt und diese mit Ammoniak, primären oder sekundären Aminen umgesetzt (US-PS 4 540 803, US-PS 4 543 344, US-PS 4 595 775, US-PS 4 397 828, US-PS 4 482 669).

Die vorliegende Erfindung stellt neue Ausgangsmaterialien für Siliziumnitrid enthaltende keramische Materialien zur Verfügung, nämlich polymere Hydridosilazane, im folgenden auch "Polyhydridosilazane" genannt.

Ein Gegenstand der vorliegenden Erfindung ist ein Verfahren zur Herstellung von polymeren Hydridosilazanen, dadurch gekennzeichnet, daß man polymere Hydridothiosilazane der Formel 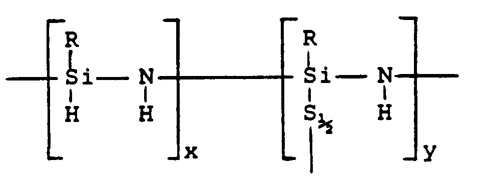
wobei R = C₁-C₆-Alkyl oder C₂-C₆-Alkenyl ist und x, y die Molfraktionen der beiden Struktureinheiten bedeuten, mit überschüssigem NH₃ umsetzt. Vorzugsweise ist R = Methyl oder Vinyl.

Die als Ausgangsprodukte eingesetzten polymeren Hydridothiosilazane, im folgenden auch "Polyhydridothiosilazane" genannt, können dadurch erhalten werden, daß man Oligohydridoalkylsilazane der allgemeinen Formel (RSiHNH)ₙ, worin n etwa 3 bis 12 ist und R = C₁-C₆-Alkyl oder C₂-C₆-Alkenyl ist, mit elementarem Schwefel in einem Ether als Lösungsmittel bei 30 bis 120°C umsetzt. Vorzugsweise arbeitet man bei 60 bis 80°C.

Die als Ausgangsprodukte für die Polyhydridothiosilazane benötigten Oligohydridoalkylsilazane (RSiHNH)ₙ können wiederum dadurch erhalten werden, daß man ein Dichlorhydridoalkylsilan der Formel RSiHCl₂, wobei R die obige Bedeutung hat, mit überschüssigem NH₃ in einem Lösungsmittel umsetzt, wie in US-PS 4 482 669 beschrieben (siehe dort insbesondere Spalten 4, 5, 7, 8). Dabei entsteht im allgemeinen ein Gemisch linearer und cyclischer Oligomerer mit verschiedenen Kettenlängen n.

Der Rest R in den Oligohydridoalkylsilazanen (RSiHNH)ₙ (im folgenden auch kurz "Oligosilazane" genannt) ist vorzugsweise Methyl oder Vinyl.

Vorzugsweise beträgt das molare Verhältnis Schwefel : RSiHNH-Einheit des Oligosilazans bei der Herstellung der polymeren Hydridothiosilazane etwa 0,1 : 1 bis 1 : 1, insbesondere 0,6 : 1 bis 0,8 : 1.

Zur Umsetzung des Reaktanten miteinander werden die Oligosilazane in einem Ether als Lösungsmittel vorgelegt und der Schwefel zugegeben, und zwar im allgemeinen portionsweise. Er löst sich in der Lösung des Oligosilazans und färbt diese zunächst gelb. Die Färbung verschwindet wieder in dem Maße, in dem der Schwefel mit den Oligosilazanen abreagiert. Dabei wird 40 - 60 % des eingesetzten Schwefels in das entstehende Polysilazan eingebaut, während der Rest als H₂S entweicht.

Die Reaktionsdauer richtet sich nach der Reaktionstemperatur. Im allgemeinen genügt eine Reaktionszeit von 1 bis 7 Stunden. Als Lösungsmittel eignen sich Ether wie THF oder Diethylenglykoldiethylether.

Die polymeren Hydridothiosilazane werden dann durch Abdestillation des Lösungsmittels unter reduziertem Druck erhalten.

Gegebenenfalls kann das Verfahren auch unter vermindertem Druck durchgeführt werden. Auch bei Drücken im Bereich von 1 bis 10 Atmosphären kann gearbeitet werden.

Die Herstellung der Polyhydridothiosilazane kann auch kontinuierlich durchgeführt werden.

Ein weiterer Gegenstand der vorliegenden Erfindung ist demgemäß ein Verfahren zur Herstellung von polymeren Hydridosilazanen, dadurch gekennzeichnet, daß man polymere Hydridothiosilazane mit überschüssigem NH₃ umsetzt, wobei die polymeren Hydridothiosilazane dadurch erhältlich sind, daß man Oligohydridoalkylsilazane der allgemeinen Formel (RSiHNH)ₙ, worin n etwa 3 bis etwa 12 ist und und R = C₁-C₆-Alkyl oder C₂-C₆-Alkenyl ist, mit elementarem Schwefel in einem Ether als Lösungsmittel bei 30 bis 120°C umsetzt.

Die als Ausgangsprodukte eingesetzten polymeren Hydridothiosilazane haben eine molekulare Struktur, die durch die Formel 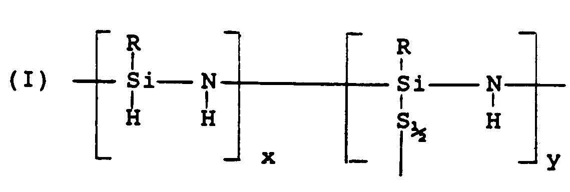
R = C₁-C₆-Alkyl oder C₂-C₆-Alkenyl x + y = 1
wiedergegeben werden kann. Dabei ist der Wert von y ein Maß für den Schwefelgehalt des Polysilazans.
Die Siliziumatome sind dabei nicht direkt miteinander verbunden, sondern über NH-Gruppen oder S-Atome. Das Verhältnis Si : N in den polymeren Hydridothiosilazanen beträgt etwa 1 : 1 bis 1,2 : 1. Der Wert von y ist umso höher (und entsprechend der Wert von x umso niedriger), je größer das Verhältnis Schwefel : RSiHNH-Einheit des Oligosilazans ist. Die jeweils vorliegenden Werte von x und y können durch Integration der ¹H-NMR-Spektren und durch die Elementaranalyse ermittelt werden. Bevorzugt sind solche polymeren Hydridothiosilazane, bei denen die Werte für y bei 0,6 bis 0,8 liegen, insbesondere bei 0,7 bis 0,8. Diese Werte lassen sich wie gesagt über den relativen Anteil des Schwefels im Reaktionsgemisch einstellen und über die genannten Analysenmethoden kontrollieren. Die eben genannten bevorzugten Werte für x, y haben sich besonders bewährt, wenn als Endprodukt der Reaktion ein festes, lösliches Polyhydridothiosilazan entstehen soll. Diese Voraussetzung ist notwendig, wenn eine Formgebung zu Monolithen oder Fasern angestrebt wird.

Die polymeren Hydridothiosilazane werden erfindungsgemäß durch Umsetzung mit Ammoniak ("Ammonolyse") in Polyhydridosilazane überführt, die wiederum durch Pyrolyse in Siliziumnitrid enthaltendes keramisches Material umgewandelt werden können.

Die Ammonolyse kann in flüssigem NH₃ erfolgen. Es ist jedoch vorteilhaft, sie in einem organischen Lösungsmittel durchzuführen. Geeignet sind alle Lösungsmittel, die sich inert gegenüber den Polyhydridothiosilazanen verhalten.

Bevorzugt sind solche Lösungsmittel, in denen das als Nebenprodukt anfallende Ammoniumsulfid geringe Löslichkeit und gute Abtrennbarkeit aufweist, z. B. Ether, aliphatische und aromatische Kohlenwasserstoffe, chlorierte Kohlenwasserstoffe. Die Reaktanten können bei der Ammonolyse in beliebiger Reihenfolge in das Reaktionsgefäß eingespeist werden. Es ist jedoch zumeist vorteilhaft, das Polyhydridothiosilazan in Lösung vorzulegen und gasförmigen Ammoniak einzuleiten oder flüssigen Ammoniak hinzuzufügen. Die Ammonolyse wird mit einem Überschuß NH₃ durchgeführt, um sicher zu gehen, daß die Reaktion vollständig ist und die Endprodukte möglichst weitgehend schwefelfrei sind. Im allgemeinen reicht für diesen Zweck die doppelte stöchiometrische Menge, wobei die stöchiometrische NH₃-Menge 3 y beträgt, wo y wieder die Molfraktion der schwefelhaltigen Struktureinheit des polymeren Hydridothiosilazans ist. Wurden die Polyhydridothiosilazane in einem geeigneten organischen Lösungsmittel hergestellt, so kann man die erfindungsgemäße Ammonolyse daran anschließend und ohne Isolierung des Polyhydridothiosilazanes in diesem Lösungsmittel durchführen.

Im allgemeinen wird bei einer Temperatur von etwa - 50 bis +100°C gearbeitet, vorzugsweise bei -20 bis +30°C, insbesondere bei Raumtemperatur (wobei mit Eis gekühlt wird). Es ist jedoch auch möglich, oberhalb Raumtemperatur, z. B. bei der Siedetemperatur des verwendeten Lösungsmittels, oder unterhalb Raumtemperatur, z. B. bei -33°C bei der Verwendung von flüssigem NH₃ zu arbeiten.

Bei der Ammonolyse der Polyhydridothiosilazane der Formel I treten Reaktionen der schwefelhaltigen Struktureinheit der Polyhydridothiosilazane ein:

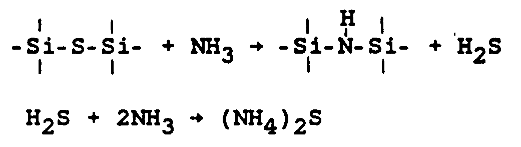

Dabei entstehen weitgehend schwefelfreie Polyhydridosilazane. Die stöchiometrische Menge NH₃ beträgt danach 3 Mol NH₃ pro Mol S.

Ein weiterer Gegenstand der vorliegenden Erfindung sind demgemäß polymere Hydridosilazane der Formel 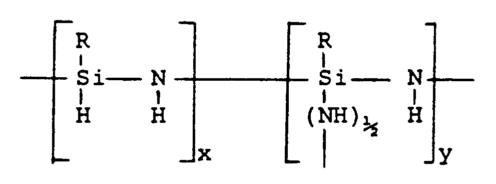
wobei R = C₁-C₆-Alkyl oder C₂-C₆-Alkenyl mit Ausnahme von R = Methyl oder Allyl für die Vertragsstaaten DE, FR, GB, NL. ist und x, y die Molfraktion der beiden Struktureinheiten bedeuten. Dabei gilt x + y = 1. Besonders bevorzugt ist R = Methyl oder Vinyl, bzw. R = Vinyl für die Vertragsstaaten DE, FR, GB, NL. Verbindungen der angegebenen Formel mit R=Methyl oder Allyl sind bereits offenbart in EP-A-0 304 239 (Vertragsstaaten DE, FR, GB, NL)

Ein weiterer Gegenstand der Erfindung sind polymere Hydridosilazane, dadurch erhältlich, daß man polymere Hydridothiosilazane mit überschüssigem NH₃ umsetzt, wobei die polymeren Hydridothiosilazane dadurch erhältlich sind, daß man Oligohydridoalkylsilazane der allgemeinen Formel (RSiHNH)ₙ, worin n etwa 3 bis etwa 12 ist und R = C₁-C₆-Alkyl oder C₂-C₆-Alkenyl mit Ausnahme von R = Methyl oder Allyl für die Vertragsstaaten DE, FR, GB, NL. ist, mit elementarem Schwefel in einem Ether als Lösungsmittel bei 30 bis 120°C umsetzt. Vorzugsweise ist R = Methyl oder Vinyl, bzw. R = Vinyl für die Vertragsstaaten DE, FR, GB, NL.

Die erhaltenen Polyhydridosilazane können durch Pyrolyse in inerter Atmosphäre bei Temperaturen von 800 bis 1200°C zu amorphen, dichten Materialien pyrolysiert werden, die Siliciumnitrid enthalten und in Spuren auch H und O enthalten können. Die inerte Atmosphäre kann dabei aus N₂, Ar oder He bestehen, vorzugsweise nimmt man N₂ oder Ar. Bei Pyrolysetemperaturen oberhalb 1200°C, etwa im Bereich von 1200°C bis 1400°C, entstehen teilamorphe, mikrokristalline keramische Werkstoffe, die als kristalline Phase α-Siliziumnitrid enthalten.

Ein besonderer Vorteil ist, daß sich die Polyhydridosilazane vor der Pyrolyse nach verschiedenen Verfahren zu dreidimensionalen Formkörpern formen lassen. Ein weiterer Gegenstand der Erfindung ist daher ein Verfahren zur Herstellung von Siliziumnitrid enthaltendem keramischen Material, dadurch gekennzeichnet, daß man die oben durch ihre Strukturformel oder durch das Verfahren zu ihrer Herstellung definierten polymeren Hydridosilazane in inerter Atmosphäre bei 800 bis 1400°C pyrolysiert.

Eine wichtige Methode der Formgebung ist das Ziehen von Fasern. Dabei lassen sich Fasern aus hochviskosen Lösungen des Polyhydridosilazans in Lösungsmitteln, wie Toluol, THF oder Hexan ziehen. Das Fasernziehen geschieht vorteilhafterweise mittels Spinndüsen von 80 bis 150 µm Durchmesser. Durch anschließendes Strecken wird der Faden verjüngt, so daß nach der Pyrolyse ein sehr fester Faden von 2 bis 20 µm, insbesondere 5 bis 15 µm Durchmesser entsteht. Anschließend wird der Faden in Luft oder Inertgas gestrocknet. Die durch anschließende Pyrolyse hergestellten Fasern finden Verwendung als mechanische Verstärkungseinlagerungen in faserverstärktem Aluminium, Aluminiumlegierungen und Keramikbauteilen.

Eine weiter wichtige Verarbeitungsmöglichkeit der Polyhydridosilazane ist die Herstellung dichter, gut haftender amorpher oder mikrokristalliner keramischer Beschichtungen auf Metallen, insbesondere Stählen, oder auf Keramiken wie Al₂O₃, ZrO₂, MgO, SiC oder Siliziumnitrid. Die Beschichtung erfolgt mit Hilfe einer Lösung des Polyhydridosilazans in organischen Lösungsmitteln wie Toluol, THF, Hexan. Die pyrolytische Umwandlung in eine amorphe bzw. mikrokristalline Schicht erfolgt im gleichen Temperaturbereich von 800 bis 1200°C bzw. 1200 bis 1400°C unter Inertgas wie oben bei dreidimensionalen Formkörpern beschrieben.

Die keramischen Beschichtungen eignen sich wegen ihrer hervorragenden Haftung, hohen Härte und Oberflächengüte besonders zur Oberflächenveredlung von mechanisch und chemisch beanspruchten Maschinenbauteilen.

Weiter kann man die oben beschriebenen Polyhydridosilazane mit gleichhoher keramischer Ausbeute von 70 bis 90 % statt in Inertgas auch in NH₃-Atmosphäre bei 800 - 1400°C pyrolysieren. Dabei resultiert ein praktisch kohlenstofffreier, glasklarer, farbloser Werkstoff. Bei der Pyrolyse in NH₃ bei 1000°C oder höher liegt der C-Gehalt unterhalb 0,5 Gew.-%. Das Pyrolyseprodukt besteht je nach Pyrolysetemperatur aus praktisch reinem amorphen Siliziumnitrid (Pyrolyse unterhalb 1200°C) oder kristallinem Siliziumnitrid (Pyrolyse oberhalb 1200, vorzugsweise oberhalb 1300°C). Die Pyrolyse in NH₃ läßt sich auf alle nach den oben beschriebenen Formgebungsverfahren hergestellten Formkörpern, also aus Polyhydridosilazan-Pulver geformte Körper, Fasern und Beschichtungen anwenden.

### Versuchsbericht 1

### (Herstellung von Oligohydridomethylsilazan (CH₃SiHNH)ₙ)

In 800 ml absolutem THF wurden 100 ml (0,97 mol) Methyldichlorsilan gelöst und für 3 Stunden Ammoniak eingeleitet (Einleitgeschwindigkeit: 0,5 l/min). Durch Kühlen mit einem Eisbad wurde die Reaktionstemperatur im Bereich von 20 bis 25°C gehalten. Zur Vervollständigung der Reaktion wurde 1 h bei Raumtemperatur gerührt und anschließend unter Argon das Ammoniumchlorid abgetrennt. Der Niederschlag wurde 2 mal mit je 350 ml THF gewaschen und die vereinigten THF-Lösungen unter reduziertem Druck eingeengt. Man erhielt ein klares, leicht bewegliches Öl von (CH₃SiHNH)ₙ in einer Ausbeute von 44,5 g = 78 % der Theorie.

### Versuchsbericht 2

### (Herstellung von polymerem Hydridothiosilazan)

In einem Rundkolben mit Rückflußkühler und Rührvorrichtung wurden 0,1 mol Oligohydridomethylsilazan (CH₃SiHNH)ₙ (Anzahl der Mole bezogen auf die in Klammern stehende Monomereinheit) unter Stickstoff in 40 ml THF gelöst und zum Rückfluß erhitzt. Man ließ in stetigem, langsamem Strom Stickstoff überströmen und leitete das Abgas in Chlorbleichlauge ein. Dort wurden die bei der Reaktion mit Schwefel entstehenden flüchtigen, geruchsintensiven Schwefelverbindungen zu geruchlosen Oxidationsprodukten umgesetzt.

Es wurden portionsweise 0,07 mol Schwefel zugegeben. Damit betrug das Verhältnis CH₃SiHNH zu Schwefel 1 : 0,7. Der Schwefel löste sich vollständig unter Bildung einer gelben Lösung. Die Farbe verblasste langsam in dem Maße, in dem der Schwefel mit den SiH-Grupen reagierte, d. h. im Laufe von 2 Stunden.

Anschließend ließ man abkühlen und destillierte das Lösungsmittel bei Unterdruck und Raumtemperatur ab. Es blieb ein fester, weißer Rückstand von 6,1 g. Dieser besaß ein Si : N-Verhältnis von 1 : 0,83 und einen Schwefelanteil von 8 Gew.-%. Dem entspricht die folgende Struktur: 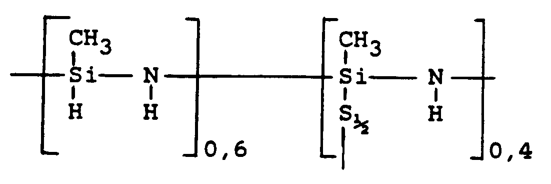
Damit entsprechen die erhaltenen 6,1 g des polymeren Hydridothiosilazans einer Ausbeute von 94 %.

### Beispiel 1

5 g des polymeren Hydridothiosilazans gemäß dem Versuchsbericht 2 (0,077 mol der Monomereinheit 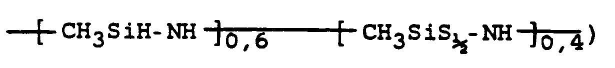
wurden in 40 ml THF gelöst. Bei 0°C wurde so lange Ammoniak eingeleitet, bis Sättigung erreicht war. Dabei fiel ein voluminöser gelber Niederschlag aus. Dieser wurde abgetrennt und die klare Lösung von Lösungsmittel befreit. Dabei blieben 3,9 g eines farblosen Feststoffes zurück. Die Analyse zeigte ein Si : N-Verhältnis von 1 : 1,14, d. h. eine Anreicherung des Stickstoffs gegenüber Silizium um 30 % beim Vergleich mit dem schwefelhaltigen Edukt (siehe Versuchsbericht 2).

Dies entspricht dem folgenden Formelschema: 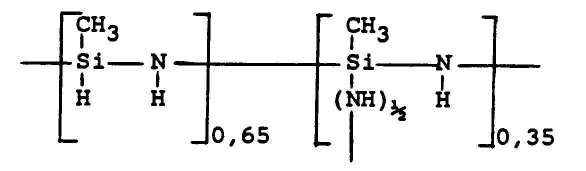
Somit ergibt sich eine Ausbeute von 81 %.

### Beispiel 2

0,1 mol Oligosilazan (Molzahl bezogen auf die Monomereneinheit CH₃SiHNH) wurden in 50 ml THF gelöst und zum Sieden erhitzt. Dazu gab man portionsweise 0,05 mol Schwefel. Während des Kochens wurde ständig Stickstoff übergeleitet, wobei das Abgas in Chlorbleichlauge eingeleitet wurde. Es wurde solange am Rückfluß erhitzt, bis die gelbe Farbe der Reaktionslösung verblaßte, d. h. etwa 2 Stunden. Man ließ abkühlen und leitete bei 0°C solange Ammoniak ein, bis Sättigung erreicht war. Dabei fiel ein voluminöser gelber Niederschlag aus. Dieser wurde abgetrennt. Die flüchtigen Bestandteile des Filtrats wurden bei Unterdruck und 20°C abdestilliert. Es blieb die hochviskose Masse des Polysilazans zurück, welches bei 0°C erstarrte und bei höheren Temperaturen eine zäh-ölige Konsistenz besaß. Das Produkt zeigte ein Si : N-Verhältnis von 1 : 1,1. Dies entspricht folgendem Formelbild: 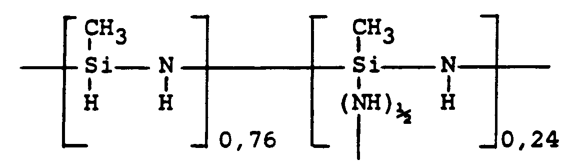
Die Ausbeute betrug 5 g (82 %). Bei einer Molekulargewichtsbestimmung wurde ein mittlerer Wert von 1150 g/mol gefunden.

### Beispiel 3

0,44 mol (25,9 g) Oligohydridomethylsilazan (Molzahl bezogen auf die Monomereinheit CH₃SiHNH) wurden in 400 ml THF gelöst. Wiederum wurde Stickstoff übergeleitet und das Abgas in Chlorbleichlauge eingeleitet. Das THF wurde zum Rückfluß erhitzt und 0,31 mol (9,8 g) Schwefel portionsweise zugegeben. Dies entsprach einem Molverhältnis Monomereinheit CH₃SiHNH : Schwefel von 1 : 0,7.

Nach beendeter Reaktion wurde bei 0°C Ammoniak bis zur Sättigung eingeleitet, worauf sich ein gelber, voluminöser Niederschlag bildete, der abfiltriert wurde und nach Trocknen 10,1 g wog. Dies waren 0,15 mol Ammoniumsulfid, was der Hälfte der eingesetzten Menge an Schwefel enspricht. Das Filtrat wurde vom Lösungsmittel befreit, wobei ein farbloser Feststoff entstand.
Die Ausbeute betrug 25,4 g.

Die Analyse ergab ein Verhältnis Si : N von 1 : 1,1. Dies entspricht dem folgenden Formelbild: 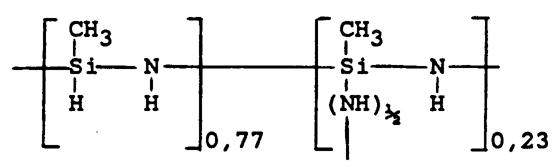
Bei der Pyrolyse dieser Verbindung in Stickstoff-Atmosphäre bei 1200°C wurde ein Siliziumnitrid enthaltendes keramisches Material mit einer keramischen Ausbeute von 71 Gew.-% erhalten.

## Patentansprüche (Patentansprüche für folgende(n) Vertragsstaat(en): BE, CH, IT, LI)

1. Verfahren zur Herstellung von polymeren Hydridosilazanen, dadurch gekennzeichnet, daß man polymere Hydridothiosilazane der Formel 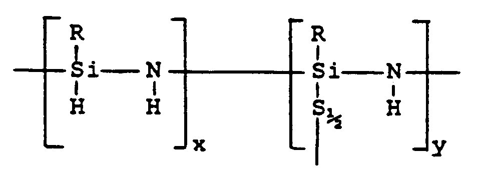 wobei R = C₁-C₆-Alkyl oder C₂-C₆-Alkenyl ist und x, y die Molfraktionen der beiden Struktureinheiten bedeuten, mit überschüssigem NH₃ umsetzt.

2. Verfahren nach Anspruch 1, dadurch gekennzeichnet, daß R = Methyl oder Vinyl ist.

3. Verfahren zur Herstellung von polymeren Hydridosilazanen, dadurch gekennzeichnet, daß man polymere Hydridothiosilazane mit überschüssigem NH₃ umsetzt, wobei die polymeren Hydridothiosilazane dadurch erhältlich sind, daß man Oligohydridoalkylsilazane der allgemeinen Formel (RSiHNH)ₙ, worin n etwa 3 bis etwa 12 ist und R = C₁-C₆-Alkyl oder C₂-C₆-Alkenyl ist, mit elementarem Schwefel in einem Ether als Lösungsmittel bei 30 bis 120°C umsetzt.

4. Verfahren nach Anspruch 3, dadurch gekennzeichnet, daß R = Methyl oder Vinyl ist.

5. Polymere Hydridosilazane der Formel 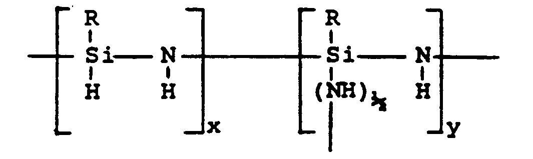 worin R = C₁-C₆-Alkyl oder C₂-C₆-Alkenyl ist und x, y die Molfraktionen der beiden Struktureinheiten bedeuten.

6. Polymere Hydridosilazane nach Anspruch 5, dadurch gekennzeichnet, daß R = Methyl oder Vinyl ist.

7. Polymere Hydridosilazane, erhältlich nach dem Verfahren gemäß einem der Ansprüche 1 bis 4.

8. Verfahren zur Herstellung von Siliziumnitrid enthaltendem keramischen Material, dadurch gekennzeichnet, daß man polymere Hydridosilazane gemäß einem der Ansprüche 5 bis 7 in inerter Atmosphäre bei 800 bis 1400°C pyrolysiert.

9. Verfahren zur Herstellung von Siliziumnitrid enthaltendem keramischen Material, dadurch gekennzeichnet, daß man polymere Hydridosilazane gemäß einem der Ansprüche 5 bis 7 in NH₃-Atmosphäre bei 800 bis 1400°C pyrolysiert.

10. Verfahren nach Anspruch 8 oder 9, dadurch gekennzeichnet, daß man zur Herstellung von Siliziumnitrid enthaltenden keramischen Fasern die polymeren Hydridosilazane zunächst in einem organischen Lösungsmittel löst, aus dieser Lösung Fasern zieht und diese nach Verdampfung des Lösungsmittels pyrolysiert.

11. Verfahren nach Anspruch 8 oder 9, dadurch gekennzeichnet, daß man zur Herstellung von Siliziumnitrid enthaltenden keramischen Formkörpern die pulverförmigen polymeren Hydridosilazane vor der Pyrolyse zu Formkörpern preßt.

12. Verfahren nach Anspruch 8 oder 9, dadurch gekennzeichnet, daß man zur Herstellung von Siliziumnitrid enthaltenden keramischen Beschichtungen die polymeren Hydridosilazane zunächst in einem organischen Lösungsmittel löst, mit dieser Lösung die Beschichtung vornimmt und diese nach Verdampfung des Lösungsmittels pyrolysiert.

13. Verfahren nach einem der Ansprüche 8 bis 12, dadurch gekennzeichnet, daß man bei 800 bis 1200°C pyrolysiert.

14. Verfahren nach einem der Ansprüche 8 bis 12, dadurch gekennzeichnet, daß man bei 1200 bis 1400°C pyrolysiert.

## Patentansprüche (Patentansprüche für folgende(n) Vertragsstaat(en): DE, FR, GB, NL)

1. Verfahren zur Herstellung von polymeren Hydridosilazanen, dadurch gekennzeichnet, daß man polymere Hydridothiosilazane der Formel 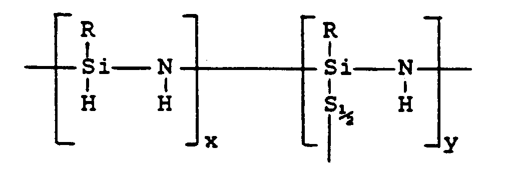 wobei R = C₁-C₆-Alkyl oder C₂-C₆-Alkenyl ist und x, y die Molfraktionen der beiden Struktureinheiten bedeuten, mit überschüssigem NH₃ umsetzt.

2. Verfahren nach Anspruch 1, dadurch gekennzeichnet, daß R = Methyl oder Vinyl ist.

3. Verfahren zur Herstellung von polymeren Hydridosilazanen, dadurch gekennzeichnet, daß man polymere Hydridothiosilazane mit überschüssigem NH₃ umsetzt, wobei die polymeren Hydridothiosilazane dadurch erhältlich sind, daß man Oligohydridoalkylsilazane der allgemeinen Formel (RSiHNH)ₙ, worin n etwa 3 bis etwa 12 ist und R = C₁-C₆-Alkyl oder C₂-C₆-Alkenyl ist, mit elementarem Schwefel in einem Ether als Lösungsmittel bei 30 bis 120°C umsetzt.

4. Verfahren nach Anspruch 3, dadurch gekennzeichnet, daß R = Methyl oder Vinyl ist.

5. Polymere Hydridosilazane der Formel 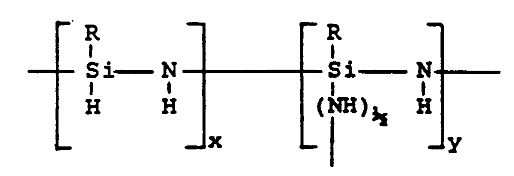 worin R = C₁-C₆-Alkyl oder C₂-C₆-Alkenyl mit Ausnahme von Methyl und Allyl ist und x, y die Molfraktionen der beiden Struktureinheiten bedeuten.

6. Polymere Hydridosilazane nach Anspruch 5, dadurch gekennzeichnet, daß R = Vinyl ist.

7. Polymere Hydridosilazane, erhältlich nach dem Verfahren gemäß einem der Ansprüche 1 bis 4, wobei R = Methyl oder Allyl ausgenommen ist.

8. Verfahren zur Herstellung von Siliziumnitrid enthaltendem keramischen Material, dadurch gekennzeichnet, daß man polymere Hydridosilazane gemäß einem der Ansprüche 5 bis 7 in inerter Atmosphäre bei 800 bis 1400°C pyrolysiert.

9. Verfahren zur Herstellung von Siliziumnitrid enthaltendem keramischen Material, dadurch gekennzeichnet, daß man polymere Hydridosilazane gemäß einem der Ansprüche 5 bis 7 in NH₃-Atmosphäre bei 800 bis 1400°C pyrolysiert.

10. Verfahren nach Anspruch 8 oder 9, dadurch gekennzeichnet, daß man zur Herstellung von Siliziumnitrid enthaltenden keramischen Fasern die polymeren Hydridosilazane zunächst in einem organischen Lösungsmittel löst, aus dieser Lösung Fasern zieht und diese nach Verdampfung des Lösungsmittels pyrolysiert.

11. Verfahren nach Anspruch 8 oder 9, dadurch gekennzeichnet, daß man zur Herstellung von Siliziumnitrid enthaltenden keramischen Formkörpern die pulverförmigen polymeren Hydridosilazane vor der Pyrolyse zu Formkörpern preßt.

12. Verfahren nach Anspruch 8 oder 9, dadurch gekennzeichnet, daß man zur Herstellung von Siliziumnitrid enthaltenden keramischen Beschichtungen die polymeren Hydridosilazane zunächst in einem organischen Lösungsmittel löst, mit dieser Lösung die Beschichtung vornimmt und diese nach Verdampfung des Lösungsmittels pyrolysiert.

13. Verfahren nach einem der Ansprüche 8 bis 12, dadurch gekennzeichnet, daß man bei 800 bis 1200°C pyrolysiert.

14. Verfahren nach einem der Ansprüche 8 bis 12, dadurch gekennzeichnet, daß man bei 1200 bis 1400°C pyrolysiert.

## Claims (Claims for the following Contracting State(s): BE, CH, IT, LI)

1. A process for preparing polymeric hydridosilazanes, which comprises reacting polymeric hydridothiosilazanes of the formula 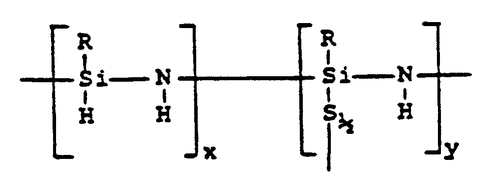 where R is C₁-C₆-alkyl or C₂-C₆-alkenyl and x, y are the mole fractions of the two structural units, with excess NH₃.

2. The process as claimed in claim 1, wherein R is methyl or vinyl.

3. A process for preparing polymeric hydridosilazanes, which comprises reacting polymeric hydridothiosilazanes with excess NH₃, where the polymeric hydridothiosilazanes are obtainable by reacting oligohydridoalkylsilazanes of the formula (RSiHNH)ₙ, in which n is from about 3 to about 12 and R is C₁-C₆-alkyl or C₂-C₆-alkenyl, with elemental sulfur in an ether as solvent at from 30 to 120°C.

4. The process as claimed in claim 3, wherein R is methyl or vinyl.

5. Polymeric hydridosilazanes of the formula 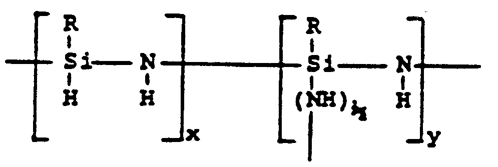 where R is C₁-C₆-alkyl or C₂-C₆-alkenyl and x, y are the mole fractions of the two structural units.

6. Polymeric hydridosilazanes as claimed in claim 5, wherein R is methyl or vinyl.

7. Polymeric hydridosilazanes obtainable according to a process as claimed in any one of claims 1 to 4.

8. A process for preparing silicon nitride-containing ceramic material, which comprises pyrolyzing polymeric hydridosilazanes as claimed in any one of claims 5 to 7 in an inert atmosphere at from 800 to 1400°C.

9. A process for preparing silicon nitride-containing ceramic material, which comprises pyrolyzing polymeric hydridosilazanes as claimed in any one of claims 5 to 7 in an NH₃ atmosphere at from 800 to 1400°C.

10. The process as claimed in claim 8 or 9, wherein silicon nitride-containing ceramic fibers are prepared by first dissolving the polymeric hydridosilazanes in an organic solvent, drawing fibers from this solution and pyrolyzing these after evaporation of the solvent.

11. The process as claimed in claim 8 or 9, wherein silicon nitride-containing ceramic shaped bodies are prepared by pressing the pulverulent polymeric hydridosilazanes into shaped bodies prior to pyrolysis.

12. The process as claimed in claim 8 or 9, wherein silicon nitride-containing ceramic coatings are prepared by first dissolving the polymeric hydridosilazanes in an organic solvent, producing the Coating with this solution and pyrolyzing this coating after evaporation of the solvent.

13. The process as claimed in any one of claims 8 to 12, wherein the pyrolysis is carried out at from 800 to 1200°C.

14. The process as claimed in any one of claims 8 to 12, wherein the pyrolysis is carried out at from 1200 to 1400°C.

## Claims (Claims for the following Contracting State(s): DE, FR, GB, NL)

1. A process for preparing polymeric hydridosilazanes, which comprises reaction polymeric hydridothiosilazanes of the formula 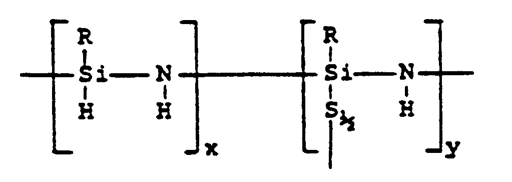 where R is C₁-C₆-alkyl or C₂-C₆-alkenyl and x, y are the mole fractions of the two structural units, with excess NH₃.

2. The process as claimed in claim 1, wherein R is methyl or vinyl.

3. A process for preparing polymeric hydridosilazanes, which comprises reacting polymeric hydridothiosilazanes with excess NH₃, where the polymeric hydridothiosilazanes are obtainable by reacting oligohydridoalkylsilazanes of the formula (RSiHNH)ₙ, in which n is from about 3 to about 12 and R is C₁-C₆-alkyl or C₂-C₆-alkenyl, with elemental sulfur in an ether as solvent at from 30 to 120°C.

4. The process as claimed in claim 3, wherein R is methyl or vinyl.

5. Polymeric hydridosilazanes of the formula 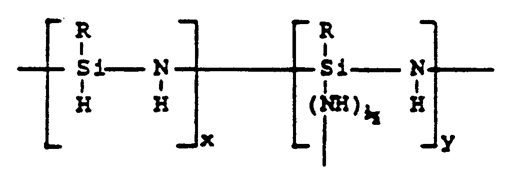 where R is C₁-C₆-alkyl or C₂-C₆-alkenyl, with the exception of methyl and allyl, and x, y are the mole fractions of the two structural units.

6. Polymeric hydridosilazanes as claimed in claim 5, wherein R is vinyl.

7. Polymeric hydridosilazanes obtainable by a process as claimed in any one of claims 1 to 4, where R is not methyl or allyl.

8. A process for preparing silicon nitride-containing ceramic material, which comprises pyrolyzing polymeric hydridosilazanes as claimed in any one of claims 5 to 7 in an inert atmosphere at from 800 to 1400°C.

9. A process for preparing silicon nitride-containing ceramic material, which comprises pyrolyzing polymeric hydridosilazanes as claimed in any one of claims 5 to 7 in an NH₃ atmosphere at from 800 to 1400°C.

10. The process as claimed in claim 8 or 9, wherein silicon nitride-containing ceramic fibers are prepared by first dissolving the polymeric hydridosilazanes in an organic solvent, drawing fibers from this solution and pyrolyzing these after evaporation of the solvent.

11. The process as claimed in claim 8 or 9, wherein silicon nitride-containing ceramic shaped bodies are prepared by pressing the pulverulent polymeric hydridosilazanes into shaped bodies prior to pyrolysis.

12. The process as claimed in claim 8 or 9, wherein silicon nitride-containing ceramic coatings are prepared by first dissolving the polymeric hydridosilazanes in an organic solvent, producing the coating with this solution and pyrolyzing this coating after evaporation of the solvent.

13. The process as claimed in any one of claims 8 to 12, wherein the pyrolysis is carried out at from 800 to 1200°C.

14. The process as claimed in any one of claims 8 to 12, wherein the pyrolysis is carried out at from 1200 to 1400°C.

## Revendications (Revendications pour l'(les) Etat(s) contractant(s) suivant(s): BE, CH, IT, LI)

1. Procédé de préparation d'hydrurosilazanes polymères, caractérisé en ce que l'on fait réagir des hydrurothiosilazanes polymères de formule 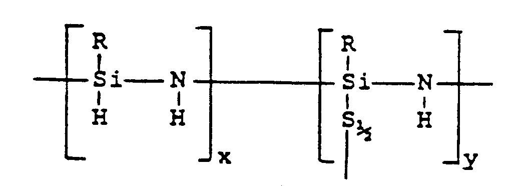 R désignant un alkyle en C₁-C₆ ou un alcényle en C₂-C₆ et x et y les fractions molaires des deux motifs, avec un excès d'ammoniac.

2. Procédé selon la revendication 1, caractérisé en ce que R est le groupe méthyle ou vinyle.

3. Procédé de préparation d'hydrurosilazanes polymères, procédé caractérisé en ce que l'on fait réagir avec un excès d'ammoniac des hydrurothiosilazanes polymères que l'on peut obtenir par réaction d'oligohydruroalkylsilazanes de formule (RSiHNH)n, n étant un nombre d'environ 3 à 12 et R un alkyle en C₁-C₆ ou un alcényle en C₂-C₆, avec du soufre élémentaire dans un éther comme solvant, à des températures de 30 à 120 °C.

4. Procédé selon la revendication 3, caractérisé en ce que R est le groupe méthyle ou vinyle.

5. Hydrurosilazanes polymères de formule 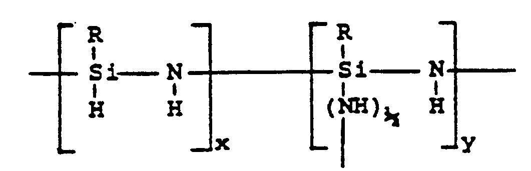 dans laquelle R désigne un alkyle en C₁-C₆ ou un alcényle en C₂-C₆ et x et y sont les fractions molaires des deux motifs de structure.

6. Hydrurosilazanes polymères selon la revendication 5, caractérisés en ce que R est le groupe méthyle ou vinyle.

7. Hydrurosilazanes polymères pouvant être obtenus par le procédé selon l'une des revendications 1 à 4.

8. Procédé de préparation de matériaux céramiques contenant du nitrure de silicium, procédé caractérisé en ce que l'on soumet à une pyrolyse en atmosphère inerte, à des températures de 800 à 1 400 °C, des hydrurosilazanes polymères selon l'une des revendications 5 à 7.

9. Procédé de préparation de matériaux céramiques contenant du nitrure de silicium, procédé caractérisé en ce que l'on soumet à une pyrolyse en atmosphère d'ammoniac, à des températures de 800 à 1 400 °C, des hydrurosilazanes polymères selon l'une des revendications 5 à 7.

10. Procédé selon la revendication 8 ou 9, caractérisé en ce que pour former des fibres céramiques contenant du nitrure de silicium on dissout d'abord les hydrurosilazanes polymères dans un solvant organique, et de la solution on étire des fibres que, après avoir évaporé le solvant, on soumet à la pyrolyse.

11. Procédé selon la revendication 8 ou 9, caracterisé en ce que pour former des objets moulés céramiques contenant du nitrure de silicium, avant la pyrolyse on presse en objets moulés les hydrurosilazanes polymères à l'état pulvérulent.

12. Procédé selon la revendication 8 ou 9, caractérisé en ce que pour former des revêtements céramiques on commence par dissoudre les hydrurosilazanes polymères dans un solvant organique, et avec la solution on forme le revêtement que, après avoir évaporé le solvant, on soumet à la pyrolyse.

13. Procédé selon l'une des revendications 8 à 12, caractérisé en ce que l'on effectue la pyrolyse entre 800 et 1 200 °C.

14. Procédé selon l'une des revendications 8 à 12, caractérisé en ce que l'on effectue la pyrolyse entre 1 200 et 1 400 °C.

## Revendications (Revendications pour l'(les) Etat(s) contractant(s) suivant(s): DE, FR, GB, NL)

1. Procédé de préparation d'hydrurosilazanes polymères, caractérisé en ce que l'on fait réagir des hydrurotniosilazanes polymères de formule 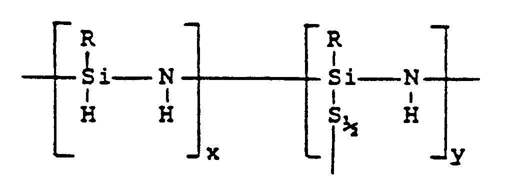 R désignant un alkyle en C₁-C₆ ou un alcényle en C₂-C₆ et x et y les fractions molaires des deux motifs, avec un excès d'ammoniac.

2. Procédé selon la revendication 1, caractérisé en ce que R est le groupe méthyle ou vinyle.

3. Procédé de préparation d'hydrurosilazanes polymères, procédé caractérisé en ce que l'on fait réagir avec un excès d'ammoniac des hydrurothiosilazanes polymères que l'on peut obtenir par réaction d'oligohydruroalkylsilazanes de formule (RSiHNH)n, n étant un nombre d'environ 3 à 12 et R un alkyle en C₁-C₆ ou un alcényle en C₂-C₆, avec du soufre élémentaire dans un éther comme solvant, à des températures de 30 à 120 °C.

4. Procédé selon la revendication 3, caractérisé en ce que R est le groupe méthyle ou vinyle.

5. Hydrurosilazanes polymères de formule 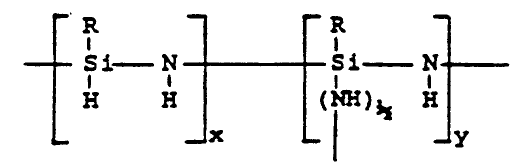 dans laquelle R désigne un alkyle en C₁-C₆ ou un alcényle en C₂-C₆ à l'exception des groupes méthyle et allyle et x et y sont les fractions molaires des deux motifs de structure.

6. Hydrurosilazanes polymères selon la revendication 5, caractérisés en ce que R est le groupe vinyle.

7. Hydrurosilazanes polymères pouvant être obtenus par le procédé selon l'une des revendications 1 à 4, dans lesquels R n'est pas le groupe méthyle ou allyle.

8. Procédé de préparation de matériaux céramiques contenant du nitrure de silicium, procédé caractérisé en ce que l'on soumet à une pyrolyse en atmosphère inerte, à des températures de 800 à 1 400 °C, des hydrurosilazanes polymères selon l'une des revendications 5 à 7.

9. Procédé de préparation de matériaux céramiques contenant du nitrure de silicium, procédé caractérisé en ce que l'on soumet à une pyrolyse en atmosphère d'ammoniac, à des températures de 800 à 1 400 °C, des hydrurosilazanes polymères selon l'une des revendications 5 à 7.

10. Procédé selon la revendication 8 ou 9, caractérisé en ce que pour former des fibres céramiques contenant du nitrure de silicium on dissout d'abord les hydrurosilazanes polymères dans un solvant organique, et de la solution on étire des fibres que, après avoir évaporé le solvant, on soumet à la pyrolyse.

11. Procédé selon la revendication 8 ou 9, caractérisé en ce que pour former des objets moulés céramiques contenant du nitrure de silicium, avant la pyrolyse on presse en objets moulés les hydrurosilazanes polymères à l'état pulvérulent.

12. Procédé selon la revendication 8 ou 9, caractérisé en ce que pour former des revêtements céramiques on commence par dissoudre les hydrurosilazanes polymères dans un solvant organique, et avec la solution on forme le revêtement que, après avoir évaporé le solvant, on soumet à la pyrolyse.

13. Procédé selon l'une des revendications 8 à 12, caractérisé en ce que l'on effectue la pyrolyse entre 800 et 1 200 °C.

14. Procédé selon l'une des revendications 8 à 12, caractérisé en ce que l'on effectue la pyrolyse entre 1 200 et 1 400 °C.
